# EUROPEAN PATENT SPECIFICATION

(11) **EP 2 745 681 B1**
(45) Date of publication and mention of the grant of the patent: **07.09.2016**
(21) Application number: 14160343.1
(22) Date of filing: 12.04.2011
(51) Int. Cl.: A01K 1/02

(54) **Farrowing pen structure**
Aufbau einer Abferkelbucht
Structure loge de mise-bas

(30) Priority: 13.04.2010 GB 201006107
(43) Date of publication of application: 25.06.2014
(62) Divisional of application: 11719607.1
(73) Proprietor: Midland Pig Producers Limited, Burton on Trent, Derbyshire DE13 7AB (GB)
(72) Inventor: Barker, Martin, Burton-on-Trent, Derbyshire DE13 7AB (GB)
(74) Representative: Connell, Mark

(56) References cited:
- EP-A1- 1 064 842
- US-A- 2 928 371
- US-A- 4 177 762

## Description

### Description of Invention

This invention relates to a farrowing pen.

When a sow farrows, certain measures may have to be taken to ensure the welfare of her litter of piglets. Firstly, piglets shortly after birth need to be kept at a temperature close to 30°C, and even in a facility which is provided indoors some means of heating might have to be provided to keep the piglets warm. Another aspect is that newly born piglets are very small compared with the sow: a piglet might weigh around 1 kg whilst the sow weighs some 250kg or even more. This means that piglets are very vulnerable to being crushed by the sow if she rolls over on them, and to obviate this problem and achieve high survival rates it is usual to constrain the sow within a part only of the floor area of a farrowing pen. The piglets are able to move to the remainder of the floor area of the pen to escape the sow when she moves around and lies down, and are able to suckle from the sow when she is lying down. Whilst accidents cannot totally be prevented, such an arrangement can ensure that the piglets have a high survival rate, and thrive.

Further aspects of the design of a farrowing pen are concerned with the quality of life of the sow and piglets. In the past, it has been common to provide a minimum of space in a farrowing pen, possibly so that a sow is not able even to turn around in the space within which she is confined. This is incompatible with modern animal welfare requirements in the UK. On the other hand, to allow too much freedom of movement for the sow increases the possibility that she might accidentally crush and kill one or more piglets.

Yet a further aspect of farrowing pen design is that it must enable the stockman to approach the sow and piglets in safety to examine them, administer any necessary treatment, and so forth. A sow is a large and powerful animal, highly protective of her piglets, so it is desirable that a farrowing pen should facilitate safe access of a stockman to a part of the pen area when required.

US 4,177,762 discloses a farrowing crate for sows which is adjustable in size to accommodate different sows. Adjustability of the crate is accomplished by pivotally mounted side panels each of which has flared ends spaced different distances from the pivot. When the side panels are swung 180°, the interior dimensions of the crate are varied.

It is broadly the object of the present invention to provide a structure for farrowing pen which addresses the above matters, and the features of the invention which enable it to do so will be particularly described hereafter.

According to one aspect of the invention, we provide a structure according to claim 1.

Both of the barrier members are moveable relative to the framework, but only one need be moveable in such a manner as to vary the floor area available to the sow.

The barrier members may each include a lower portion which extends upwardly, preferably vertically, from a position adjacent the floor surface of the pen, and an upper portion which is inclined to the lower portion, the upper portions extending towards one another. The barrier members may each comprise a structure of elongate bars, preferably tubular, spaced from one another by a distance sufficient to prevent passage of the sow therebetween. Elongate bars spaced just close enough to prevent a sow from passing therebetween will permit a piglet to pass therebetween, and each barrier member may have a lowermost elongate bar extending generally parallel to the floor surface of the pen and spaced therefrom by a distance enabling a piglet readily to pass underneath such bar. In this manner, the freedom of the piglets to move around the pen is substantially un-inhibited by the barrier members but the sow cannot move beyond the confines of the barrier members. Hence, the piglets have a zone or zones of the pen which they can safely occupy without risk of crushing by the sow.

A first one of the barrier members is pivotably mounted relative to the framework, being pivotable about an axis in its lower portion to enable its upper portion to move towards and away from the other barrier member.

A second barrier member is moveable relative to the framework to vary the floor area available to the sow, and this barrier member remains in generally the same orientation relative to the horizontal. This second barrier member may be supported by a support slide provided generally above the farrowing pen, so that the second barrier member can be moved angularly about an upright axis as well as being moved bodily towards and away from the first barrier member.

Assuming the farrowing pen is generally rectangular in plan view, this may enable the second barrier member to be set at an inclination to the adjacent boundary wall of the farrowing pen, as desired. For this purpose, opposite ends of the second barrier member may be provided with respective latch elements releasably engageable with selected ones of a number of latch receiving formations spaced along adjacent parts of the framework.

Such provision also enables the stockman to enter the overall confines of the farrowing pen even when it is occupied by a sow with piglets, and stand safely between the second barrier member and the adjacent boundary wall of the pen, with the second barrier member securely held in position by engagement of the respective latch elements at opposite ends of the barrier member with the selected latch formation provided on the framework. If the stockman desires to adjust the position of the second barrier member, he can release the two latch elements from the respective latch formations, and preferably there is a single latch-operating member for doing so. Such a latch operating member may comprise a bar or other element extending lengthwise of the second barrier member; it may be liftable to disengage the latch elements from the latch formations but, when released, acting under gravity or spring force immediately to return the latch elements into engagement with the closest adjacent latch receiving formations. Thus, if the sow exerts force on the second barrier member while the barrier member is temporarily able to move its position within the farrowing pen, the stockman can instantly release the latch operating member to re-engage the latch elements with the latch formations and prevent the second barrier member from moving. Thereby the risk of crushing injury to the stockman if the sow exerts force on the second barrier member is reduced or eliminated.

An entry gate member for permitting access and egress of the sow relative to the part of the farrowing pen between the first and second barrier members may be provided, which entry gate may be provided adjacent one end of the second barrier member. The latch formations for co-operation with the latch element at that end of the second barrier member may be provided on the entry gate.

The framework including the entry gate may together delineate a part of the farrowing pen to which the sow, once installed in the region between the first and second barrier members, does not have access. Such part of the farrowing pen may be provided with a heating device to enable the piglets, when occupying such area, to keep warm.

Such a heating device may comprise a heatable region of the floor of such area.

A region or regions of the floor of the farrowing pen may be heatable by circulation of, e.g., warm water through a passage or passages in one or more heating panels forming floor elements in that region of the farrowing pen floor. The remainder of the floor of the farrowing pen may be slatted, comprising a number of panels of, e.g., plastics material, of suitable slatted configuration, enabling waste matter to fall between the slats to a collection zone therebeneath. The framework may support a feed trough, water supply, and so forth, such as are commonly to be found in pens for animal accommodation.

The invention will now be described by way of example with reference to the accompanying drawings, of which
Figure 1 is a perspective view, from one corner and above, of an installation of two adjacent farrowing pens in accordance with the invention;
Figure 2 is a perspective view, from the opposite corner and above, of the installation shown in figure 1;

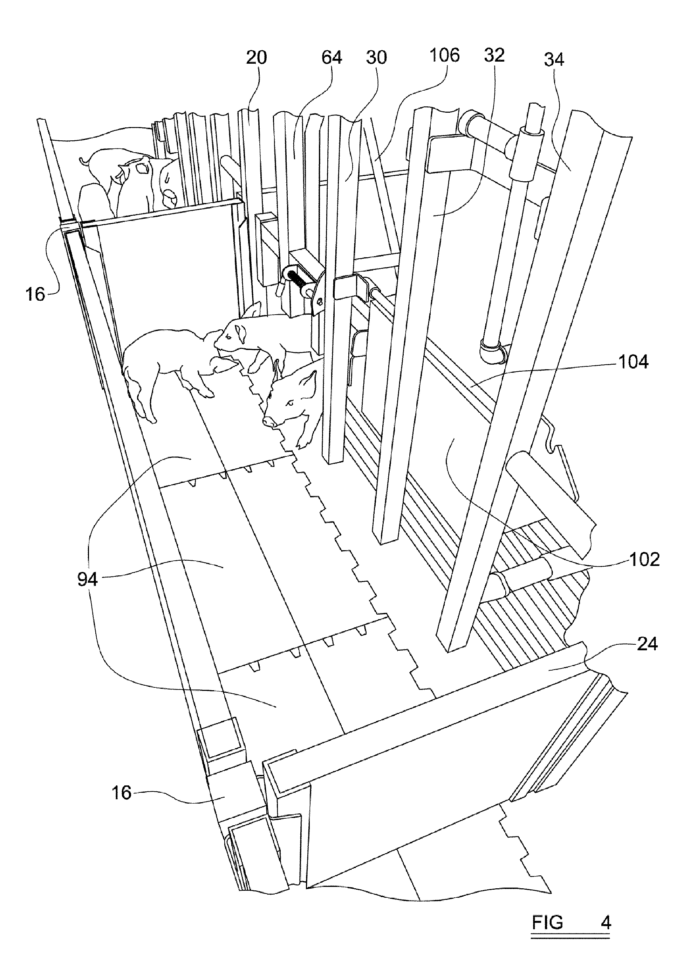

Figure 3, 4 and 5 are perspective view, showing details of a farrowing pen installation the same in principle as that of figures 1 and 2 but differing in some small features of design.

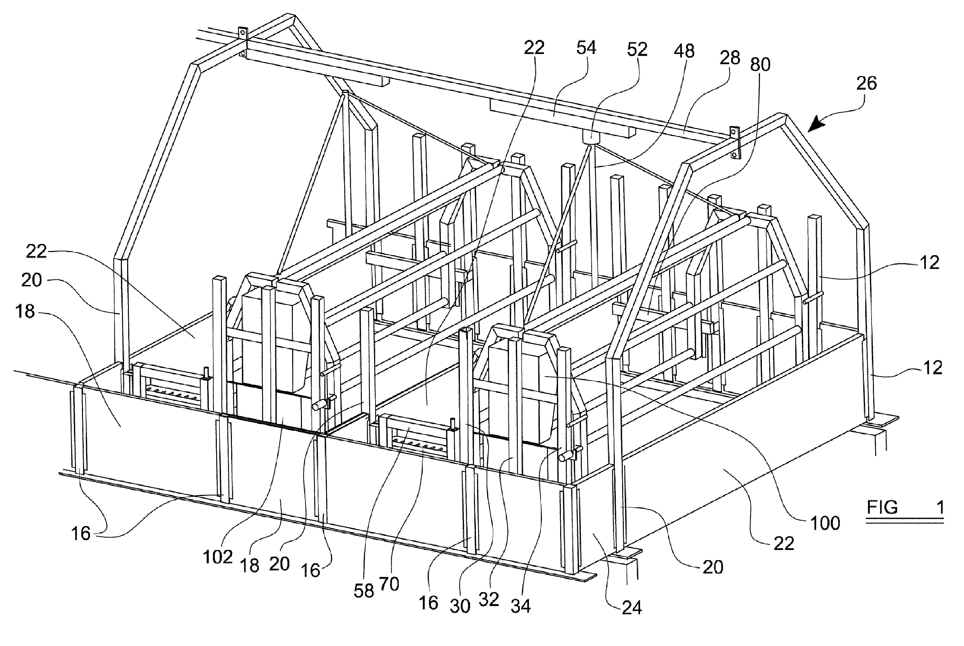

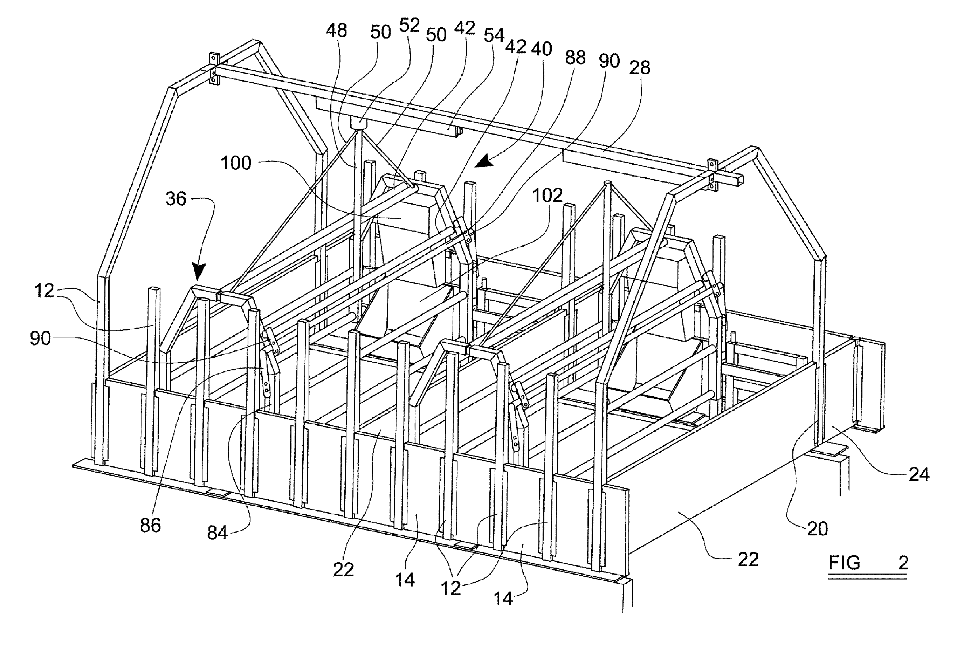

Referring firstly to figures 1 and 2 of the drawings, these illustrate an installation of two farrowing pens adjacent one another. Any number of such pens may be installed alongside one another in a building, and there may be two or more rows of the pens, with appropriate gangways therebetween for access purposes.

The boundaries, in plan view, of the two pens are defined by a number of stanchions between which panels are fitted by being slid vertically downwardly into receiving formations provided on the stanchions. Particularly, there is a row of stanchions 12 between which panels 14 are fitted to define a rear wall, and a spaced parallel row of stanchions 16 between which panels 18 are fitted to define a front boundary wall of the pens. There are some intermediate stanchions 20 with formations to receive long panels 22 extending to spaced ones of the stanchions 12 of the rear wall, and short panels 24 extending to spaced stanchions 16 of the front wall. Figure 1 shows that the panels 22, 24 nearest the viewpoint form an end wall of the row of pens, while the next and subsequent panels 22, 24 form a common wall between adjacent such pens. Spaced ones of the stanchions 12, 20 are extended upwardly and carry a "gable" structure indicated generally at 26 to support an overhead beam 28 extending lengthwise of the row of pens.

Further stanchions 30, 32, 34 are provided between the stanchions 20 which support the panels 22, 24 these further stanchions being to the height of the stanchions 12 at the rear wall of the row of pens.

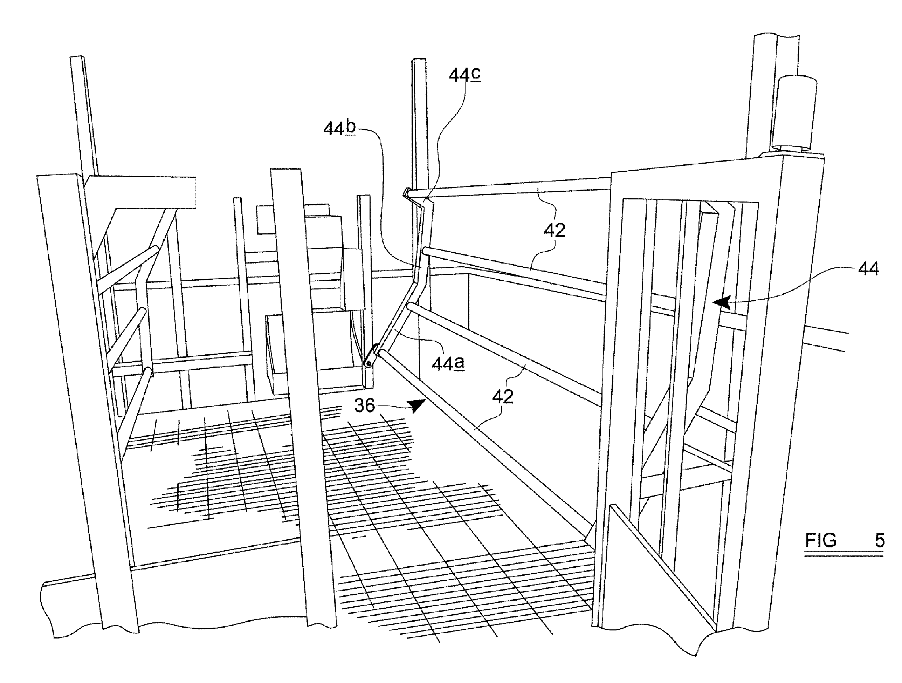

First and second barrier members are indicated generally at 36, 40. The first barrier member 36 is pivotably supported between the stanchion 34 and an opposed one of the stanchions 12. The barrier member 36 is of the form most clearly seen in figure 5, and comprises four tubular bars 42 secured in spaced parallel relationship to one another to end members 44. The end members 44 are pivotally connected to the respective stanchions 34, 12 and each has a lower part which, when the barrier member is in the orientation in which it is shown in figures 1 and 2, extends vertically and carries the two lowermost bars 42. Above that, the support members 44 are inclined and this inclined portion thereof carries the next bar 42, whilst at the top of the barrier member there is a horizontally extending portion 44c which carries the uppermost bar 42. Figure 5 shows that the first barrier member 36 is able to pivot back towards the adjacent side wall of the pen, and in this position it offers substantially no obstruction to the space, above floor level, between the side walls of the pen. A latch device, not shown, is provided for holding the first barrier member 36 in the position in which it is shown in figures 1 and 2, so that it can remain in that position if pushed by a sow.

The second barrier member 40, like the first barrier member 36, comprises four horizontally oriented tubular bars supported by end members. The second barrier member 40 is in a general orientation which corresponds to the orientation in which the first barrier member 36 is shown in figures 1 and 2, the second barrier member facing the first barrier member so that their respective uppermost bars 42 lie adjacent one another. The spacing between the bars 42 of the two barrier members is such that a typical sow cannot get between them i.e. the sow is constrained between the barrier members although she is able to lie down in the space between them when her piglets are suckling.

The second barrier member 40, whilst remaining in the general upright orientation as shown in figures 1 and 2, is able to move between the side walls of the farrowing pen. For this purpose, the barrier member is supported from the overhead beam 28. An upright member 48 extends from the next-to highest horizontal bar 42 of the barrier member 40, joined at its uppermost end by inclined bracing members 50 extending to the ends of the uppermost bar 42. At the uppermost end of the member 48 a slider 52 is provided, engaging in a slideway 54 provided beneath the beam 28. Although not illustrated, the slider 52 is provided with a clamping or other fixing device to enable its position lengthwise of the slideway 54 to be held.

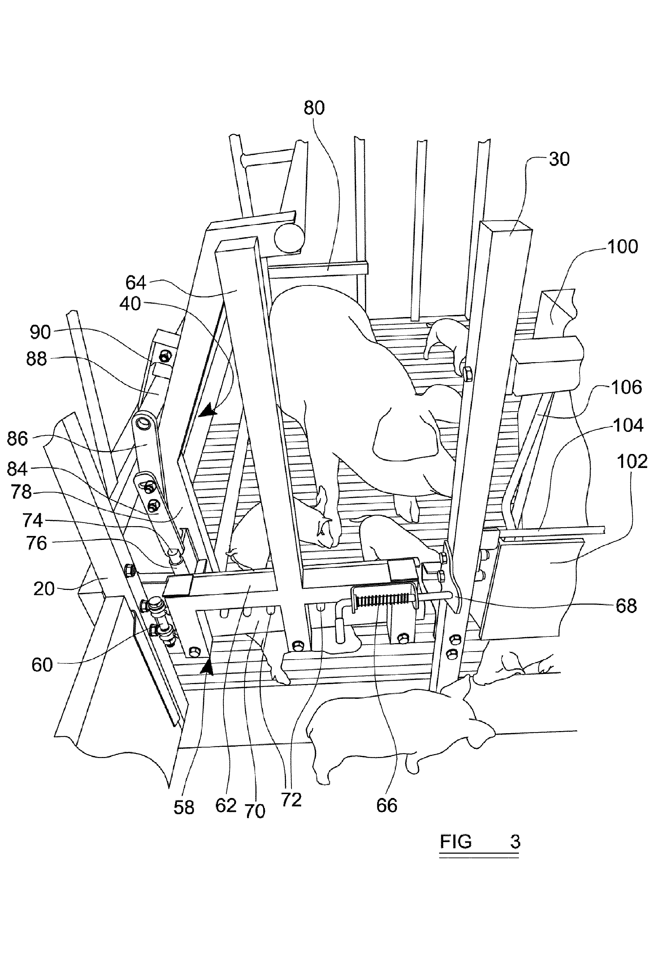

The second barrier member is also able to be held in position relative to the framework of the farrowing pen by latching arrangements, one at each end of the barrier member. Figure 1 of the drawings shows an access gate 58 pivotally supported between the stanchion 30 and the adjacent stanchion 20, and such an access gate 58, although of different configuration to that shown in figure 1, is shown in figure 3 of the drawings. Such an access gate is connected by a hinge 60 to the stanchion 20, and comprises a horizontally extending member 62 and vertically extending member 64. At the end of member 62 opposite the hinge 60 a slidable bolt 66 is carried by the member 62 and engageable with a keep 68 on the stanchion 30. Beneath the member 62, the access gate 58 carries a member 70 provided with a row of latch receiving formations in the form of vertically extending apertures 72, engageable by a latch element 74 moveable lengthwise within a vertically oriented tubular member 76 fixed to the adjacent end member 78 of the second barrier member 40.

At the opposite end of the barrier member 40, a similar latch element is provided. It is engageable with a selected one of a number of latch formations like the apertures 72, provided in a member 80 fixed to the stanchions 12 opposite the access gate 58. The apertures 72 in the member 70 and in the member 80 are elongated in the direction of the length of the second barrier member 40. Hence, if required, the second barrier member can be latched in position in an orientation other than parallel to the side walls of the farrowing pen. It can be positioned so as to provide a greater space between the two barrier members at one end thereof than at the other end thereof, if required.

When the position of the second barrier member within the farrowing pen is required to be changed, in addition to loosening the clamp securing the slider 52 in position lengthwise of the slideway 54, the latch elements 74 have to be withdrawn from engagement with the respective latch formations 72. The latch elements each have an upwardly extending connection member 84 with bolted connection to an end flange 86 of a latch-operating member 88 which extends the full length of the second barrier member and is upwardly moveable, within guides 90 on the barrier member, to raise the latch elements. This enables the latching arrangement holding the second barrier member in position to be released by a person working within the farrowing pen but outside the area between the two barrier members. If, however, while this is being done a sow occupying the pen moves against the second barrier member in such a way as to risk crushing the person between the barrier member and the adjacent wall of the farrowing pen, the person has simply to release the latch-operating member 88. When the latch operating member is no longer held up the latch elements as 74 will drop into the next available latch formations 72, preventing further movement of the second barrier member even if the sow continues to press against it.

The lowermost bars of the barrier members, and the member 70, are at a height above the floor of the farrowing pen sufficient for piglets, up to when they are weaned and no longer kept with their mother, to have access to all parts of the pen while the sow is confined between the barrier members. As the piglets grow and the potential problem of their being crushed by the sow becomes less significant, the second barrier member may be repositioned to afford greater freedom of movement to the sow. In the region between the stanchions 12 and the stanchions 20, the floor of the farrowing pen, as illustrated, comprises slatted plastics panels whose spacing is selected to be suitable for the size of the sow's and piglets' feet.

In the region between the stanchions 16 and panels 18 and the stanchions 20, 30, 32, 34 the floor of the farrowing pen is not slatted but comprises a number of panels 94. These panels are provided with a heating facility to provide the piglets with the necessary warmth to enable them to survive their early days. Conveniently the panels 94 may be of hollow construction affording passages which have water, heated to an appropriate temperature circulated therethrough. When not running round the pen or suckling from the sow, the piglets can lie on the panels to derive the necessary warmth.

Further features of the farrowing pen depicted in the drawings include a water supply device 100 supported by stanchion 32 and, beneath the water supply device, a feed trough 102. The feed trough 102 is carried by an axle 104 which is pivotably supported at its opposite ends by the stanchions 30, 34. The axle has a handle 106 secured to it, by which the axle can be moved angularly , pivoting the feed trough upwardly to an angle at which its contents can be emptied from its edge adjacent the axle 104, to fall through the slatted floor of the sow-accommodating part of the farrowing pen for disposal. A catch is associated with the handle 106 so that the feed trough cannot be raised and emptied out by the sow if she pushes it upwards with her snout.

A farrowing pen in accordance with the invention thus provides a number of advantageous features to benefit the sow, her piglets, and the management thereof by the stockman. The arrangement of the first and second barrier members can provide the necessary constraint on the sow to protect the piglets when they are newly born, but can give the sow more space for movement as the piglets grow. It also enables the stockman to work within the confines of the farrowing pen while being protected from the sow. The heated floor area is beneficial to the piglets during their early hours and days, but without the fire risks associated with the more generally used heat lamps. The tiltable feed trough can, by use of the handle thereof, be emptied by the stockman without necessitating his or her entry to the farrowing pen area. When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention as defined in the appended claims.

## Claims

1. A structure for a farrowing pen having a framework provided with first and second barrier members (36, 40) between which a sow can be confined, wherein the first barrier member (36) is pivotably mounted relative to the framework about an axis in a lower portion of the first barrier member (36) to enable an upper portion of the first barrier member (36) to move towards and away from the second barrier member (40), **characterised in that** the second barrier member (40) is moveable relative to the framework to vary the floor area available to the sow, while remaining in generally the same orientation above the horizontal.

2. A structure according to claim 1 wherein the first and second barrier members (36, 40) each include a lower portion which extends upwardly, and an upper portion which is inclined to the lower portion, the upper portions extending towards one another.

3. A structure according to claim 1 or claim 2 wherein the second barrier member (40) is supported by a support slide (54) provided generally above the farrowing pen, so that the second barrier member (40) can be moved angularly about an upright axis as well as being moved bodily towards and away from the first barrier member (36).

4. A structure according to claim 3 wherein the second barrier member (40) is able to set at an inclination to an adjacent boundary wall of the farrowing pen.

5. A structure according to claim 4 wherein opposite ends of the second barrier member (40) are provided with respective latch elements (74) releasably engageable with selected ones of a number of latch receiving formations (72) spaced along respective adjacent parts of the framework.

6. A structure according to claim 5 comprising a latch operating member (88) for effecting release of the latch elements (74) from the latch receiving formations (72); OR comprising a latch operating member (88) for effecting release of the latch elements (74) from the latch receiving formations (72) and wherein the latch operating member (88) comprises a bar extending lengthwise of the second barrier member (40); OR comprising a latch operating member (88) for effecting release of the latch elements (74) from the latch receiving formations (72) and wherein the latch operating member (88) comprises a bar extending lengthwise of the second barrier member (40) and wherein the latch operating member (88) is liftable to release the latch elements (74) from the latch formations (72), the latch elements (74) engaging the latch formations (72) when the latch operating member (88) is released.

7. A structure according to any one of the preceding claims comprising an entry gate (58) permitting access of the sow relative to a part of the farrowing pen between the first and second barrier members (36, 40).

8. A structure according to claim 7 wherein the entry gate (58) is provided adjacent one end of the second barrier member (40).

9. A structure according to claim 8 as appendent directly or indirectly to claim 5 wherein the latch formations (72) for co-operation with the latch element (74) at said end of the second barrier member (40) are provided on the entry gate (58).

10. A structure according to any one of the preceding claims wherein the framework delineates a part of the pen to which the sow, once occupying the region between the first and second barrier members (36, 40), does not have access.

11. A structure according to claim 10 wherein said part of the farrowing pen is provided with a heating device.

12. A structure according to claim 11 wherein the heating device comprises a heatable region of the floor of said area.

13. A structure according to claim 12 wherein said floor region is heatable by passage of heated liquid through a passage or passages in one or more floor elements.

14. A farrowing pen having a structure according to any one of the preceding claims.

## Patentansprüche

1. Aufbau für eine Abferkelbucht mit einem Gerüst, das mit ersten und zweiten Sperrelementen (36, 40) versehen ist, zwischen denen eine Sau eingesperrt werden kann, wobei das erste Sperrelement (36) relativ zum Gerüst um eine Achse in einem unteren Abschnitt des ersten Sperrelements (36) drehgelenkig angeordnet ist, um einem oberen Abschnitt des ersten Sperrelements (36) zu ermöglichen sich in Richtung des zweiten Sperrelements (40 und von diesem weg zu bewegen, **dadurch gekennzeichnet, dass** das zweite Sperrelement (40) relativ zum Gerüst bewegbar ist, um die zur Unterbringung der Sau verfügbare Bodenfläche zu variieren, während es generell in der gleichen Orientierung über der Horizontalen verbleibt.

2. Aufbau nach Anspruch 1, wobei die ersten und zweiten Sperrelemente (36, 40) jeweils einen unteren Abschnitt. Der sich nach oben erstreckt, und einen oberen Abschnitt einschließen, der zum unteren Abschnitt geneigt ist, wobei sich die oberen Abschnitte aufeinander zu gerichtet erstrecken.

3. Aufbau nach Anspruch 1 oder Anspruch 2, wobei das zweite Sperrelement (40) von einer Traggleitschiene (54) getragen wird, die generell über der Abferkelbucht bereitgestellt ist, sodass das zweite Sperrelement (40) in einem Winkel um eine aufrechte Achse bewegt werden kann, sowie körperlich in Richtung der ersten Sperre (36) und von dieser weg bewegt wird.

4. Aufbau nach Anspruch 3, wobei das zweite Sperrelement (40) fähig ist, eine Neigung zu einer angrenzenden Grenzwand der Abferkelbucht einzustellen.

5. Aufbau nach Anspruch 4, wobei entgegengesetzte Enden des zweiten Sperrelements (40) mit jeweiligen Verriegelungselementen (74) versehen sind, die lösbar mit selektierten Elementen einer Reihe von Verriegelungsaufnahmeformationen (72) in Eingriff bringbar sind, die entlang jeweiliger benachbarter Teile des Gerüsts beabstandet sind.

6. Aufbau nach Anspruch 5, der ein Element (88) umfasst, das die Verriegelungen betätigt, um die Freigabe der Verriegelungselemente (74) aus den Verriegelungsaufnahmeformationen (72) zu bewirken; ODER ein Element (88) umfasst, das die Verriegelungen betätigt, um die Freigabe der Verriegelungselemente (74) aus den Verriegelungsaufnahmeformationen (72) zu bewirken und, wobei das Element (88), das die Verriegelungen betätigt, eine Stange umfasst, die sich in der Längsrichtung des zweiten Sperrelements (40) erstreckt; ODER ein Element (88) umfasst, das die Verriegelungen betätigt, um die Freigabe des Verriegelungselements (74) aus den Verriegelungsaufnahmeformationen (72) zu bewirken und, wobei das Element (88), das die Verriegelungen betätigt, eine Stange umfasst, die sich in der Längsrichtung des zweiten Sperrelements (40) erstreckt und, wobei das Element (88), das die Verriegelungen betätigt, hochziehbar ist, um die Verriegelungselemente (74) aus den Verriegelungsformationen (72) freizugeben, wobei die Verriegelungselemente (74) in die Verriegelungsformnationen (72) einrasten, wenn das Element (88) zur Betätigung der Verriegelungen freigegeben wird.

7. Aufbau nach einem beliebigen der vorangehenden Ansprüche, der ein Eingangstor (58) umfasst, das der Sau Zugang relativ zu einem Teil der Abferkelbucht zwischen den ersten und zweiten Sperrelementen (36, 40) erlaubt.

8. Aufbau nach Anspruch 7, wobei das Eingangstor (58) angrenzend an ein Ende des zweiten Sperrelements (40) bereitgestellt ist.

9. Aufbau nach Anspruch 8 wie direkt oder indirekt an den
Anspruch angehängt, wobei die Verriegelungsformationen (72) zur Kooperation mit dem Verriegelungselement (74) am Ende des zweiten Sperrelements (40) am Eingangstor (58) bereitgestellt sind.

10. Aufbau nach einem beliebigen der vorangehenden Ansprüche, wobei das Gerüst einen Teil der Abferkelbucht abgrenzt, zu dem die Sau, sobald sie den Bereich zwischen den ersten und zweiten Sperrelementen (36, 40) besetzt, keinen Zugang hat.

11. Aufbau nach Anspruch 10, wobei der besagte Teil der Abferkelbucht mit einer Heizvorrichtung versehen ist.

12. Aufbau nach Anspruch 11, wobei die Heizvorrichtung einen beheizbaren Bereich des Bodens der besagten Fläche umfasst.

13. Aufbau nach Anspruch 12, wobei der besagte Bodenbereich durch Durchfluss erwärmter Flüssigkeit durch einen Durchgang oder Durchgänge in einem oder mehreren Bodenelementen beheizbar ist.

14. Abferkelbucht mit einem Aufbau nach einem beliebigen der vorangehenden Ansprüche.

## Revendications

1. Structure pour cage de parturition dotée d'une charpente munie d'un premier et d'un second élément de barrière (36, 40) entre lesquels une truie peut être confinée, le premier élément de barrière (36) étant monté en rotation par rapport à la charpente par rapport à un axe dans une partie inférieure du premier élément de barrière (36) pour permettre à une partie supérieure du premier élément de barrière (36) de se déplacer vers et à l'opposé du second élément de barrière (40), ladite structure étant **caractérisée en ce que** le second élément de barrière (40) est mobile par rapport à la charpente pour faire varier la surface au sol disponible pour la truie, tout en restant généralement dans la même orientation au-dessus de l'horizontale.

2. Structure selon la revendication 1, dans laquelle les premier et second éléments de barrière (36, 40) comportent chacun une partie inférieure qui s'étend verticalement, et une partie supérieure qui est inclinée par rapport à la partie inférieure, les parties supérieures s'étendant l'une vers l'autre.

3. Structure selon la revendication 1 ou 2, dans laquelle le second élément de barrière (40) est supporté par une glissière de support (54) située généralement au-dessus de la cage de parturition, de sorte que le second élément de barrière (40) puisse être déplacé angulairement par rapport à un axe vertical et puisse être déplacé physiquement vers et à l'opposé du premier élément de barrière (36).

4. Structure conformément à la revendication 3, dans laquelle le second élément de barrière (40) peut être réglé avec une inclinaison par rapport à une paroi de délimitation contiguë de la cage de parturition.

5. Structure selon la revendication 4, dans laquelle les extrémités opposées du second élément de barrière (40) sont munies d'éléments de verrou respectifs (74) pouvant être solidarisées de façon amovible aux éléments sélectionnés d'un certain nombre de formations de réception de verrou (72) espacées suivant des parties contiguës respectives de la charpente.

6. Structure selon la revendication 5, comprenant un élément d'actionnement de verrou (88) permettant de libérer les éléments de verrou (74) des formations de réception de verrou (72) ; OU comprenant un élément d'actionnement de verrou (88) permettant de libérer les éléments de verrou (74) des formations de réception de verrou (72), l'élément d'actionnement de verrou (88) comprenant une barre s'étendant dans le sens de la longueur du second élément de barrière (40) ; OU comprenant un élément d'actionnement de verrou (88) permettant de libérer les éléments de verrou (74) des formations de réception de verrou (72), l'élément d'actionnement de verrou (88) comprenant une barre s'étendant dans le sens de la longueur du second élément de barrière (40), l'élément d'actionnement de verrou (88) pouvant être relevé pour libérer les éléments de verrou (74) des formations de verrou (72), les éléments de verrou (74) étant solidarisés aux formations de verrou (72) lorsque l'élément d'actionnement de verrou (88) est libéré.

7. Structure selon l'une quelconque des revendications précédentes, comprenant une porte d'entrée (58) permettant l'accès de la truie par rapport à une partie de la cage de parturition entre les premier et deuxième éléments de barrière (36, 40).

8. Structure selon la revendication 7, dans laquelle la porte d'entrée (58) est prévue à côté d'une extrémité du deuxième élément de barrière (40).

9. Structure selon la revendication 8 dépendant directement ou indirectement de la revendication, dans laquelle les formations de verrou (72), pour coopérer avec l'élément de verrou (74) à ladite extrémité du second élément de barrière (40), sont situées sur la porte d'entrée (58).

10. Structure selon l'une quelconque des revendications précédentes, dans laquelle la charpente définit une partie de la cage à laquelle la truie, une fois qu'elle occupe la région comprise entre les premier et deuxième éléments de barrière (36, 40), n'a pas accès.

11. Structure selon la revendication 10, dans laquelle ladite partie de la cage de parturition est munie d'un dispositif de chauffage.

12. Structure selon la revendication 11, dans laquelle le dispositif de chauffage comprend une région chauffable au sol de ladite surface.

13. Structure selon la revendication 12, dans laquelle ladite région au sol est chauffable par le passage d'un liquide chauffé dans un ou des passages d'un ou plusieurs éléments de sol.

14. Cage de parturition présentant une structure selon l'une quelconque des revendications précédentes.
